(19) Europäisches Patentamt
European Patent Office
Office européen des brevets

(11) **EP 2 533 069 A1**

(12) **EUROPEAN PATENT APPLICATION**

(43) Date of publication:
**12.12.2012 Bulletin 2012/50**

(51) Int Cl.:
*G01S 7/292* [(2006.01)]    *G01S 3/74* [(2006.01)]

(21) Application number: **12169522.5**

(22) Date of filing: **25.05.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **10.06.2011 EP 11169553**<br><br>(71) Applicant: **Sony Corporation**<br>**Tokyo 108-0075 (JP)** | (72) Inventors:<br>• **Testar, Miquel**<br>**70182 Stuttgart (DE)**<br>• **Stirling-Gallacher, Richard**<br>**2808 McKinney Avenue**<br>**Dallas, TX 75204 (US)**<br><br>(74) Representative: **Witte, Weller & Partner**<br>**Postfach 10 54 62**<br>**70047 Stuttgart (DE)** |

(54) **Signal processing unit and method**

(57) The present invention relates to a signal processing unit for accurately estimating from a time-domain signal (y(t), $y(kT_s)$) at least one frequency ($f_i$) and corresponding amplitude ($A_i$) of at least one complex exponential. The signal processing unit is configured to transform the time-domain signal (y(t), $y(kT_s)$) into a frequency-domain signal (Y(f)), and to detect at least one peak frequency ($f_{peak}$) in a power spectrum of the frequency-domain signal (Y(f)). The signal processing unit is further configured to determine at least one frequency band of interest (BoI) corresponding to the at least one peak frequency ($f_{peak}$), and to determine at least one signal-to-noise ratio ($SNR_{BoI}$) corresponding to the at least one frequency band of interest (BoI). The signal processing unit is further configured to perform at least one subsequent time-domain processing step for accurately estimating, based on the time-domain signal (y(t), $y(kT_s)$), the at least one frequency ($f_i$) and corresponding amplitude ($A_i$) of the at least one complex exponential using the at least one frequency band of interest (BoI) and/or the at least one signal-to-noise ratio ($SNR_{BoI}$).

Fig. 4

**Description**

FIELD OF INVENTION

The present invention relates to a signal processing unit and method for accurately estimating from a time-domain signal at least one frequency and corresponding amplitude of at least one complex exponential. The present invention also relates to an object detection system for detecting at least one target object at a range, the system comprising such signal processing unit. The present invention further relates to a computer program and a computer readable non-transitory medium for implementing such a method.

BACKGROUND OF THE INVENTION

An object detection system for determining a range of a target object is also known as a radar system (radio detection and ranging). A frequency modulated continuous wave (FMCW) object detection or radar system uses a transmission signal with linearly increasing frequency comprising a number of consecutive chirps. Such a system comprises a transmitter for transmitting a transmission signal and a receiver for receiving transmission signal reflections from the target object as a reception signal. The range of the target object can be estimated using the frequency difference between the transmission signal and the reception signal, also known a beat frequency. The beat frequency is directly proportional to the range of the target object.

The range resolution is defined as the minimum distance between two target objects which can be successfully separated. When using traditional frequency-domain techniques, this range resolution depends only on the bandwidth of the chirp and the speed of propagation. US 2009/0224978 Al for example discloses a detection device and method using such frequency-domain techniques for direction of arrival estimation. In particular, US 2009/0224978 A1 discloses a detection device with a transmission sensor array and a reception sensor array that is formed of n sensor elements, estimating a target count indicating the number of targets based on reflected signals of transmission signals sent from the transmission sensor array and reflected from the targets, and estimating an angle at which each reflected signal comes based on the target count.

Time-domain techniques however allow finer resolution to be obtained (so-called "super-resolution" techniques). For example, US 6,529,794 B1 discloses a FMCW sensor system. The emitted signals are received after reflection at targets and processed to form a measured signal whose frequency spectrum is analyzed. Discrete equidistant samples are arranged in a double Hankel matrix in the existing sequence. This matrix is diagonalized with a singular value decomposition and an approximation is identified taking only the principle values into consideration, in order to calculate the frequencies and their amplitudes there from using known methods.

BRIEF SUMMARY OF THE INVENTION

It is an object of the present invention to provide a signal processing unit and method for accurately estimating from a time-domain signal at least one frequency and corresponding amplitude for at least one complex exponential having improved performance, in particular providing less computational load, finer range resolution, improved robustness of low signal-to-noise (SNR) situations and/or reduced absolute and relative positioning errors. It is a further object of the present invention to provide an object detection system comprising or using such signal processing unit, and a computer program and a computer readable non-transitory medium for implementing such signal processing method.

According to an aspect of the present invention there is provided a signal processing unit for accurately estimating from a time-domain signal at least one frequency and corresponding amplitude of at least one complex exponential. The signal processing unit is configured to transform the time-domain signal into a frequency-domain signal and to detect at least one peak frequency in a power spectrum of the frequency-domain signal. The signal processing unit is further configured to determine at least one frequency band of interest corresponding to the at least one peak frequency and to determine at least one signal-to-noise ratio corresponding to the at least one frequency band of interest. Further, the signal processing unit is configured to perform at least one subsequent time-domain processing step for accurately estimating, based on the time-domain signal, the at least one frequency and corresponding amplitude of the at least one complex exponential using the at least one frequency band of interest and/or the at least one signal-to-noise ratio.

According to a further aspect of the present invention there is provided an object detection system for detecting at least one target object at a range. The system comprises a transmitter for transmitting a transmission signal, and a receiver for receiving transmission signal reflections from the at least one target object as a reception signal. The receiver comprises a mixer for generating a mixed signal based on the transmission signal and the reception signal. The system further comprises the signal processing unit according to the present invention, wherein the mixed signal is the time-domain signal.

According to a further aspect there is provided a signal processing method for accurately estimating from a time-domain signal at least one frequency and corresponding amplitude of at least one complex exponential. The method comprises transforming the time-domain signal into a frequency-domain signal and detecting at least one peak in a power spectrum of the frequency-domain signal. The method further comprises determining at least one frequency band of interest corresponding to the at least one peak and determining at least one signal-to-noise ratio corresponding to the at least one frequency band of interest. Further, the method comprises performing least one subsequent time-domain processing step for accurately estimating, based on the time-domain signal, at the at least one frequency and corresponding amplitude of the at least one complex exponential using the at least one frequency band of interest and/or the at least one signal-to-noise ratio.

According to still further aspects the computer program comprising program means for causing a computer to carry out the steps of the method according to the present invention, where in said computer program is carried out on a computer, as well as a computer readable non-transitory medium having instructions stored thereon which, when carried out on a computer, cause the computer to perform the steps of the method according to the present invention are provided.

Preferred embodiments of the invention are defined in the dependent claims. It shall be understood that the claimed method, the claimed computer program and the claimed computer readable medium have similar and/or identical preferred embodiments as the claimed signal processing unit or object detection system and as defined in the dependent claims.

The present invention is based on the idea to perform a pre-estimation in an initial stage by determining at least one frequency band of interest and corresponding signal-to-noise ratio in the frequency-domain and to use the determined frequency band of interest or the corresponding signal-to-noise ratio (in particular the signal-to-noise ratio) in at least one (in particular multiple) subsequent time-domain processing step, in particular for super-resolution time-domain processing. In this way, further stages or steps can be adapted to the current situation. In particular, the computational load required in subsequent stages or steps can be optimally tuned. Just as an example, the determined frequency band of interest can be used in an adaptive band-pass filter for filtering the time-domain signal. In particular the determined signal-to-noise ration can be used in various ways. Just as an example, the determined signal-to-noise ration can be compared to a given threshold. In one example, subsequent processing steps can only be performed if the determined signal-to-noise ratio is equal to or above the given threshold. In another example, a specific method can be performed if the determined signal-to-noise ratio is equal or above the given threshold, and/or another method can be performed if the determined signal-to-noise threshold is below the given threshold. In another example, the determined signal-to-noise parameter can be used to define a certain parameter.

For example, when the determined signal-to-noise ratio from the pre-estimation stage is used in a model-order-selection algorithm for estimating a model-order, an improved robustness in low SNR situations or conditions can be achieved. In another example, when the determined signal-to-noise ratio from the pre-estimation stage is used in a reduced-rank-Hankel approximation (RRHA), an improved robustness in low SNR situations or conditions can be achieved. In a further example, when the determined signal-to-noise ratio from the pre-estimation stage is used in a refinement stage to refine the at least one estimated frequency, the absolute and relative positioning errors can be reduced.

With the signal processing unit and method using super-resolution time-domain processing described herein, a significantly improved result can be achieved compared to using conventional frequency-domain techniques, in particular an improved range resolution. For example, with the signal processing unit and method described herein, an improvement of the range resolution of up to 15 times can be achieved compared to a frequency-domain technique where the range resolution is limited to $c / (2\Delta f)$.

BRIEF DESCRIPTION OF DRAWINGS

These and other aspects of the present invention will be apparent from and explained in more detail below with reference to the embodiments described hereinafter. In the following drawings

Fig. 1    shows a schematic diagram of an embodiment of an object detection system;

Fig. 2    shows a diagram of an exemplary FMCW transmission signal used in the object detection system of Fig. 1;

Fig. 3    shows a diagram of a part of the FMCW transmission signal of Fig. 2 and a part of a corresponding reception signal;

Fig. 4    shows a diagram of an embodiment of a signal processing method or unit;

Fig. 5    shows an example of the pre-estimation step of Fig. 4;

Fig. 6       shows a first example of the time-domain eigenvalue decomposition step of Fig. 4;

Fig. 7       shows a diagram of a second example of the time-domain eigenvalue decomposition step of Fig. 4;

Fig. 8       shows an example of the model-order selection step of Fig. 7;

Fig. 9       shows a graph of an exemplary power spectrum; and

Fig. 10      shows a graph of an exemplary power spectrum showing results of the time-domain super-resolution method compared to a FFT.

DETAILED DESCRIPTION OF THE INVENTION

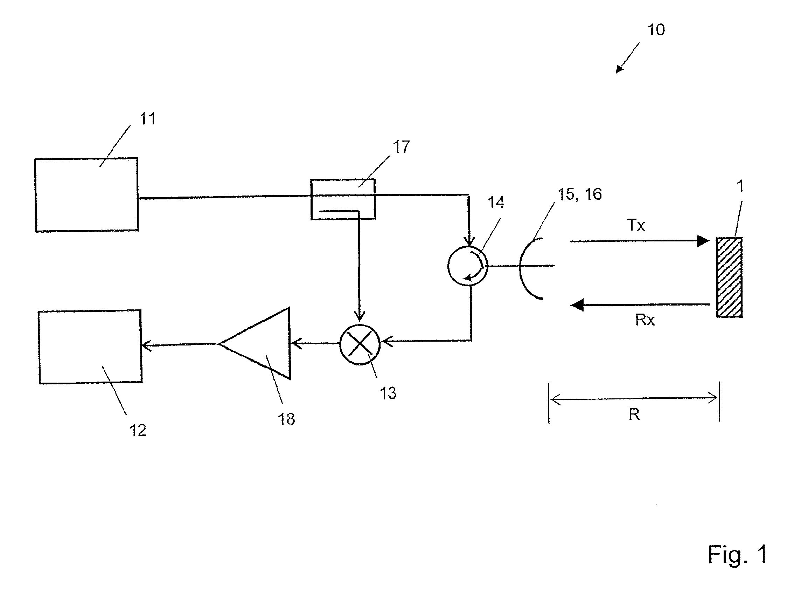

In the following the signal processing unit and method will be described with reference to an object detection system, in particular the object detection system 10 according to the embodiment of Fig. 1. However, it shall be understood that the signal processing unit and method can also be implemented in any other suitable system, in particular an object detection system, such as, for example, an active imaging system, a security sensor system, a medical sensor system, a spectroscopy system, a car radar system (e.g. for parking and/or adaptive cruise control), an air traffic control system, an aircraft or boat radar system, a missile and/or target guidance system, a border security system, or the like.

Fig. 1 shows a schematic diagram of an object detection system 10 according to an embodiment. The object detection system 20 determines or estimates a range R of a target object 1 by transmitting a frequency modulated continuous wave (in the following FMCW) transmission signal Tx and receiving transmission signal reflections of the transmission signal Tx from the target object 1 as a reception signal Rx. The system can basically use any kind of suitable frequency signal. Just as an example, the system can use a central frequency $f_c$ of the transmission signal of at least 1 kHz, in particular at least 100 kHz, in particular at least 1 MHz, in particular at least 100 MHz. In a specific example the system can use higher frequency signals, such as in a short or mid range FMCW object detection or radar system. In this case, for example, a central frequency $f_c$ of the transmission signal Tx can be at least 2 GHz, for example at least 40 GHz. In particular, the central frequency $f_c$ can be at least 100 GHz, for example at least 1 THz. Thus, Terahertz frequencies or mm /sub-mm wavelengths can be used.

In the embodiment of Fig. 1, the object detection system 10 comprises a signal processing unit 12, which functioning or configuration will be explained in more detail in this description. The object detection system 10 further comprises a transmitter antenna 15 for transmitting the FMCW transmission signal Tx and a receiver antenna 16 for receiving the reception signal Rx. The transmitter antenna 15 and/or receiver antenna 16 can be implemented in form of any suitable antenna or multiple antennas or an antenna array. For example, in the embodiment of Fig. 1 the transmitter antenna 15 and the receiver antenna 16 are implemented with a single transmitter and receiver antenna.

The object detection system 10 comprises a signal generator 11 for generating the FMCW transmission signal Tx. The objection detection system 10 further comprises a mixer 13 for generating a mixed signal based on the transmission signal Tx and the reception signal Rx. In the embodiment of Fig. 1, the object detection system 10 further comprises a circulator 14 for routing the transmission signal Tx and the reception signal Rx between the transmitter and receiver antenna 15, 16, the signal generator 11 and the mixer 13, since a single transmitter and receiver antenna is used in the embodiment of Fig. 1. As can be seen in Fig. 1, the transmission signal Tx is supplied to the mixer 13 from the signal generator 11 via a coupler 17 and the reception signal Rx is supplied to the mixer 13 by the circulator 14. Thus, the reception signal Rx is mixed with the signal Tx that is instantaneously transmitted. The resultant signal after the mixer (mixed signal) has two components. A first component is at double the central frequency $f_c$ of the transmission signal Tx and a second component is at the lower frequency-domain, also called baseband component. Within this second component, the range R information of the target object 1 can be extracted, as these are seen as frequency shifts. The range R is obtained using the frequency shift between the transmission signal Tx and the reception signal Rx, also known as beat frequency $f_{beat}$. The beat frequency $f_{beat}$ is directly proportional to the range R, as will be explained further on. Optionally, also the velocity v of the target object 1 can be obtained using the Doppler shift.

In general, a transmitter of the object detection system 10 can comprise the signal generator 11 and/or the transmitter antenna 15. A receiver of the object detection system 10 can comprise the receiver antenna 16 and/or the mixer 13. The output of the mixer 13 (mixed signal) is supplied to the signal processing unit 12. The transmitter and/or receiver can optionally further comprise analog filter(s) and/or amplifier(s). In Fig. 1 the receiver further comprises an amplifier 18. Here, the output of the amplifier 18 (amplified mixed signal) is supplied to the signal processing unit 12. The same housing can be used for the transmitter and the receiver (transmitter antenna 15 and receiver antenna 16), thus forming a transceiver.

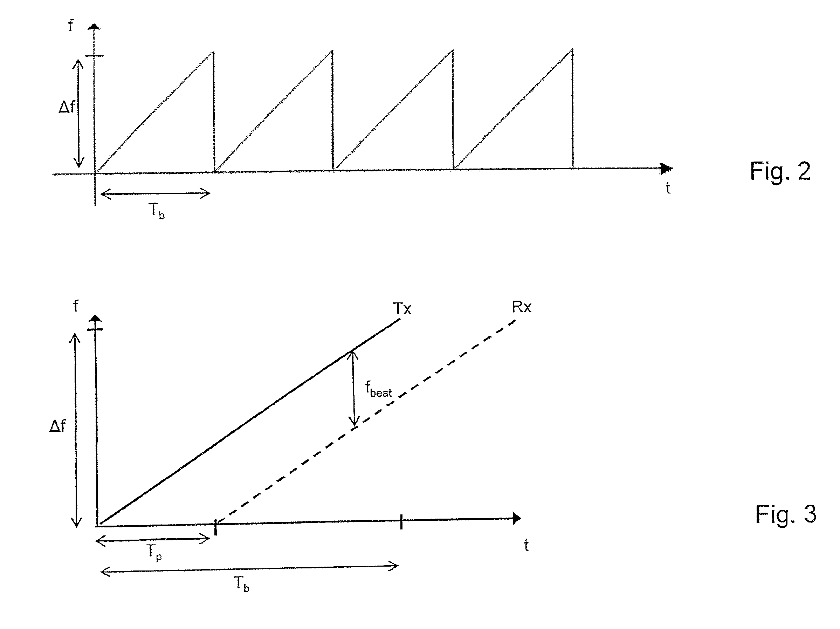

Fig. 2 shows a diagram of a FMCW transmission signal used in the object detection system of Fig. 1. The FMCW transmission signal Tx comprises a number of consecutive chirps. Each chirp is a portion of linearly increasing frequency. Each chirp has a duration $T_b$ and a frequency bandwidth $\Delta f$.

Fig. 3 shows a diagram of part of the FMCW transmission signal Tx of Fig. 2 (indicated by the solid line in Fig. 3) and a part of a corresponding reception signal Rx (indicated by the dashed line in Fig. 3). One single chirp having the duration $T_b$ and the frequency bandwidth $\Delta f$ is shown in Fig. 3. After a delay $T_p$ (or also called flight time) transmission signal reflections from the target object 1 are received as the reception signal Rx. The frequency difference between the transmission signal Tx and the reception signal Rx is the beat frequency $f_{beat}$.

Apart from the beat frequency, a Doppler frequency is also present at the output of the mixer. Doppler effect occurs when the wave front of the transmission signal Tx transmitted by the system reaches the target object 1. This produces a frequency shift which is proportional to the velocity v of the target and to the central frequency $f_c$. The following equation shows the dependence of on the beat frequency $f_{beat}$ from range R, velocity v, transmitted chirp bandwidth $\Delta f$, chirp duration $T_b$, chirp center frequency $f_c$ and the speed of the light c:

$$f_b \approx \frac{1}{2\pi}\frac{d}{dt}\left[A_R T_p t + \left(\omega_c T_p - \frac{A_R}{2}T_p^2\right)\right] \approx \frac{\Delta f}{T_b}\cdot\frac{2\cdot R}{c} + f_c\cdot\frac{2\cdot v}{c} \qquad .$$

The time-domain (or mixed) signal is generally first processed in the frequency-domain, by using a frequency transformation operator. The frequency transformation operator can in particular be a Fast Fourier Transformation (FFT). The following equation shows an example of an analytical expression of a transformation of the time-domain signal, produced by a number of consecutive chirps, to the frequency-domain using FFT:

$$Y(f,k) = \int_{(k-1/2)\cdot Tb + T_{p_{MAX}}}^{(k+1/2)\cdot Tb} y(t)e^{-j2\pi\cdot f\cdot t}dt,$$

where y(t) is the time-domain signal, $T_b$ is the duration of one chirp, f is frequency, t is time and k is the number of chirps.

Then a power spectrum is determined in the frequency-domain and a peak detection method is performed. There exist multiple known methods to perform peak detection. One example is thresholding, wherein a target object is detected when the power in the power spectrum overcomes a certain value. Another example is CFAR (Constant False Alarm Rate) wherein the detection is adapted dynamically. However, it shall be understood that any other suitable peak detection method can be used.

The two main factors that may limit the detection of the range R of a target object are the maximum range $R_{max}$ that can be detected and the range resolution $\delta R$. The maximum detectable range $R_{max}$ is limited by the duration $T_b$ of the chirp used. The chirp duration $T_b$ has to be much larger (for example ten times or more) than the flight time $T_p$. Another limiting factor is the maximum bandwidth of the signal which is for example half (or lower) than the sampling rate of the sampling unit.

When the detection is performed in the frequency-domain, the range resolution depends on the bandwidth of the used chirp and on the propagation speed of the wave. Assuming an observation time, which is equal to the chirp duration $T_b$, to be at least ten times higher than the flight time $T_p$, the beat frequency $f_{beat}$ will be resolvable to an accuracy of $2 / T_b$. As the detected range R is directly proportional to the detected beat frequency $f_{beat}$ and the chirp duration $T_b$, the range resolution $\delta f_b$ is proportional to the resolution $\delta f_b$ of the beat frequency, which is equivalent to the frequency resolution. As the frequency resolution is inversely proportional to the chirp duration $T_b$, the range resolution $\delta R$ is only dependant on the chirp bandwidth $\Delta f$ and on the speed of propagation c, as it is analytically described in the following equation:

$$\delta f_b \approx \frac{1}{T_b}$$

$$R = \frac{T_b c}{2\Delta f}f_b \quad\longrightarrow\quad \delta R = \frac{T_b c}{2\Delta f}\delta f_b \quad\longrightarrow\quad \delta R = \frac{c}{2\Delta f}$$

Thus, the range resolution δR is limited to c / (2Δf). In order to overcome the range resolution limitation, two main families of spectral estimation techniques can be considered: autoregressive modelling and time-domain eigenvalue decomposition. While autoregressive modelling might be a good candidate for single component estimation with high accuracy, time-domain eigenvalue decomposition is the favoured choice for range resolution enhancement in most applications.

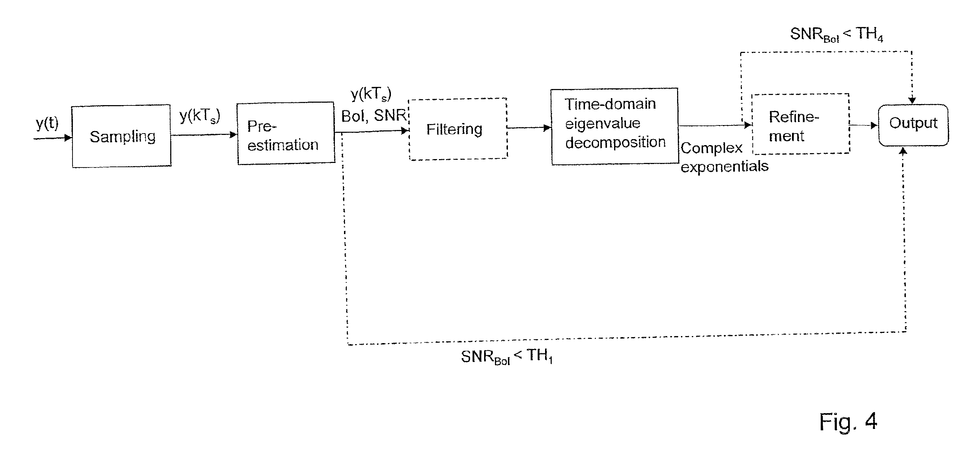

Fig. 4 shows a diagram of an embodiment of the signal processing unit or corresponding method. The signal processing unit or method accurately estimates from a time-domain signal y(t) at least one frequency $f_i$ and corresponding amplitude $A_i$ of at least one complex exponential. The time-domain signal y(t) can for example be the mixed signal as explained in the foregoing. In a first step the time-domain signal y(t) can be sampled, yielding a sampled time-domain signal $y(kT_s)$. In the following the term time-domain signal can be used interchangeably with sampled time-domain signal $y(kT_s)$. The sampling can be performed in the signal processing unit 12 or can be performed by a separate sampling unit. Just as an example, the sampling unit can be an analog-to-digital converter (ADC) or the like.

The signal processing unit or method shown in Fig. 1 comprises different stages. An initial stage is pre-estimation. In this stage at least one frequency band of interest BoI and corresponding signal-to-noise ratio $SNR_{BoI}$ are determined using frequency-domain techniques. The determined BoI and/or SNR or $SNR_{BoI}$ from this initial stage are used in one or more subsequent processing steps. In this way, the computational load to perform detection of a target object can for example be tuned. Subsequently, in another stage time-domain eigenvalue decomposition is performed to obtain an (initial) estimator of the at least one frequency $f_i$ and corresponding amplitude $A_i$. Optionally, in a final stage, the estimations obtained can be used in a refinement to obtain a final solution.

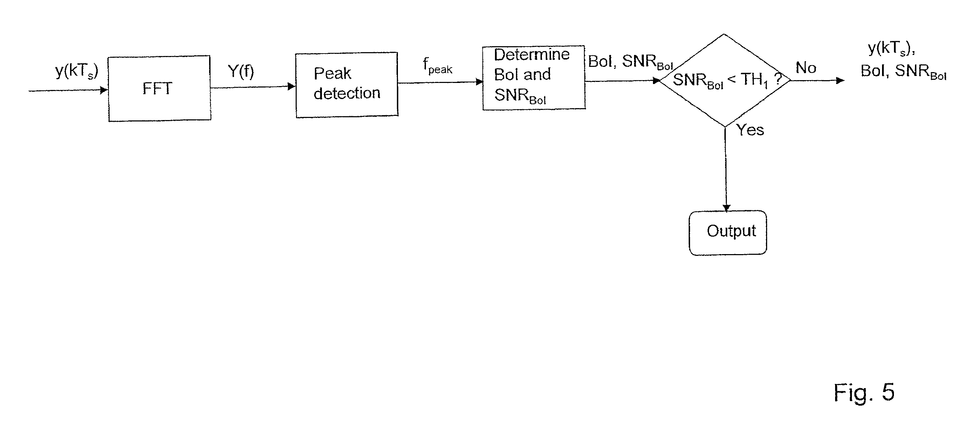

The initial step is a pre-estimation step. Fig. 5 shows an example of such pre-estimation step of Fig. 4. First, the time-domain signal y(t) or $y(kT_s)$ is transformed into a frequency-domain signal Y(f). For example, a FFT as previously explained can be used. Then, a peak detection is performed by detecting at least one peak frequency $f_{peak}$ in a power spectrum of the frequency-domain signal Y(f). Subsequently at least one frequency band of interest BoI corresponding to the at least one peak frequency $f_{peak}$ is determined. Also, at least one signal-to-noise ratio $SNR_{BoI}$ corresponding to the at least one frequency band of interest BoI is determined.

This determined at least one frequency band of interest BoI and/or at least one signal-to-noise ratio $SNR_{BoI}$ is then used in at least one subsequent time-domain estimating step for accurately estimating, based on the time-domain signal y(t) or $y(kT_s)$, the at least one frequency $f_i$ and corresponding amplitude $A_i$ of the at least one exponential. This improves performance. Examples of such use of the BoI and/or $SNR_{BoI}$ will be given in the following description.

The at least one frequency band of interest BoI can, for example, be determined by determining a start frequency $f_a$ on one side with respect to the corresponding peak frequency $f_{peak}$ and a stop frequency $f_b$ on the other side with respect to corresponding peak frequency $f_{peak}$. Thus, the BoI is a spectral range between the start frequency $f_a$ and the stop frequency $f_b$. In this case, in a first example each of the start frequency $f_a$ and the stop frequency $f_b$ can be determined at a predefined distance from the corresponding peak frequency $f_{peak}$. Alternatively, in a second example each of the start frequency $f_a$ and the stop frequency $f_b$ can be determined at a predefined power level threshold $P_{TH}$. Any other suitable way of determining the start frequency $f_a$ and the stop frequency $f_b$ can also be used.

Referring to the first example, a number of range bins $N_{bins}$, being a range bin the metric used to measure in the range axis, can be defined, in which the band of interest should consist on, and the start frequency $f_a$ and stop frequency $f_b$ of the band of interest are defined symmetrically from one peak frequency $f_{peak}$:

$$R_{bin} = \delta R = \frac{c}{2\Delta f} \qquad\qquad f_{bin} = \frac{\Delta f}{T_{chirp}} \cdot \frac{2 \cdot R_{bin}}{c}$$

$$f_a = f_{peak} - \frac{N_{bins}}{2} \cdot f_{bin} \qquad\qquad f_b = f_{peak} + \frac{N_{bins}}{2} \cdot f_{bin}$$

Referring to the second example, a power threshold $P_{TH}$ can be defined. Scanning from the frequency position of the $n^{th}$ peak $f_{peak_n}$ towards the negative direction, $f_a$ is the first frequency where the value of the power received is lower than $P_{TH}$:

$$f_{a,n} : X(f) \underset{f=f_{peak_n} \to 0}{\leq} P_{TH} \cdot$$

The same procedure is applied in the positive direction to obtain $f_b$, wherein $f_s$ is the sampling frequency:

$$f_{b,n} : X(f) \underset{f=f_{peak_n} \to \frac{f_s}{2}}{\leq} P_{TH} \cdot$$

The expression for the $n^{th}$ BoI can then be the following:

$$BoI_n : f \in \left(f \geq f_{a,n}\right) \& \left(f \leq f_{b,n}\right).$$

Thus, the SNR for the $n^{th}$ BoI can be written as:

$$SNR_{BoI_n} = \frac{Y\left(f_{peak_n}\right)}{\sum_{f=0}^{f=f_s/2} Y\left(f_{f \notin (f_a:f_b)_{1..N}}\right)}$$

The signal-to-noise ratio $SNR_{BoI}$ can for example be determined as the ratio of the maximum power level $Y(f_{peak})$ in the corresponding frequency band of interest BoI and the mean value of the power spectrum outside the corresponding frequency band of interest BoI.

In particular, a number of peak frequencies $f_{peak\ n}$ can be determined. In this case a corresponding frequency band of interest $BoI_n$ for each peak frequency $f_{peak\ n}$, can be determined. Then, in one example a corresponding signal-to-noise ratio $SNR_{BOI\ n}$ for each frequency band of interest $BoI_n$ can be determined. In an alternative example, at least part of the number of frequency bands of interest can be joined to a joint frequency band of interest, and a corresponding signal-to-noise ratio for the joint frequency band of interest can be determined. The start frequency of the joint band of interest can be the start frequency of first BoI (from low to high frequency) and the stop frequency can be the stop frequency of last BoI.

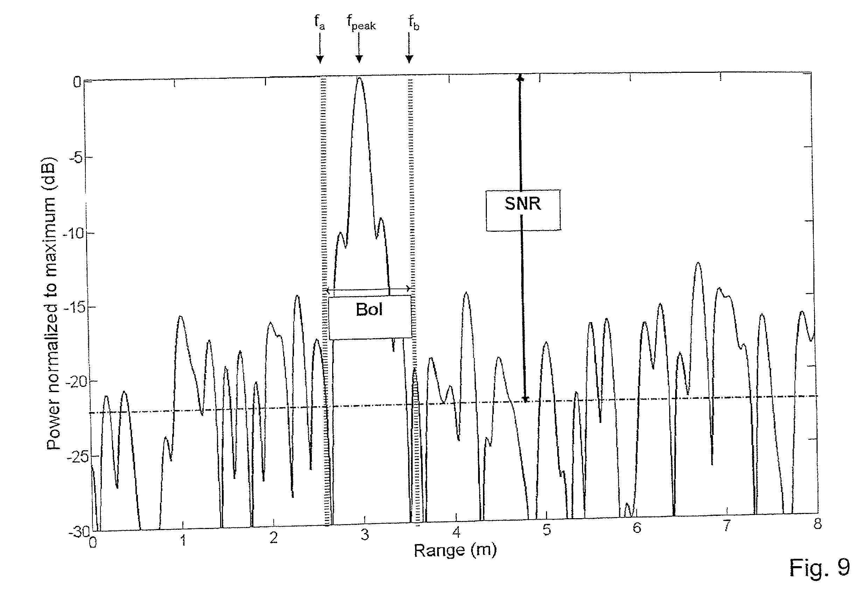

Fig. 9 shows a graph of an exemplary power spectrum. In particular, Fig. 9 shows the detection of a peak frequency and corresponding frequency band of interest (marked as BoI in Fig. 9). Here, the start frequency $f_a$ and stop frequency $f_b$ are determined at a predefined distance from the peak frequency $f_{peak}$. In particular, $f_a$ and $f_b$ are located at a predefined number of bins symmetrically to the peak frequency $f_{peak}$.

As can be seen in Fig. 5, the signal-to-noise ratio $SNR_{BoI}$ is compared with a first threshold $TH_1$, and subsequent processing steps are performed, only if the signal-to-noise ratio $SNR_{BoI}$ is equal to or above the first threshold $TH_1$. If the signal-to-noise ratio $SNR_{BoI}$ is below the first threshold $TH_1$, the estimation is terminated and an output is given. In this case, a stable result or solution cannot be generated. For example, the output is the determined at least one peak frequency $f_{peak}$ and a corresponding amplitude $R_{peak}$. This is an example where the $SNR_{BoI}$ is used in a subsequent processing step.

Turning again to Fig. 1, optionally (as indicated by the dashed lines) after the pre-estimation the time-domain signal $y(t)$, $y(kT_s)$ can be filtered, for example using at least one adaptive (digital) band-pass filter corresponding to the at least one determined frequency band of interest BoI. This is an example where the BoI is used in a subsequent processing step.

For example, in case a layer is detected at a short distance from the radar system, the detected peaks are at low frequencies. Up-conversion can then be applied to the signal before filtering in order to relax the specifications (order requirements) of the filter. Just as an example, if all the detected bands are at a relative frequency (normalized with half of the Nyquist frequency) lower than 0.1, the signal is modulated with a signal with relative frequency 0.1.

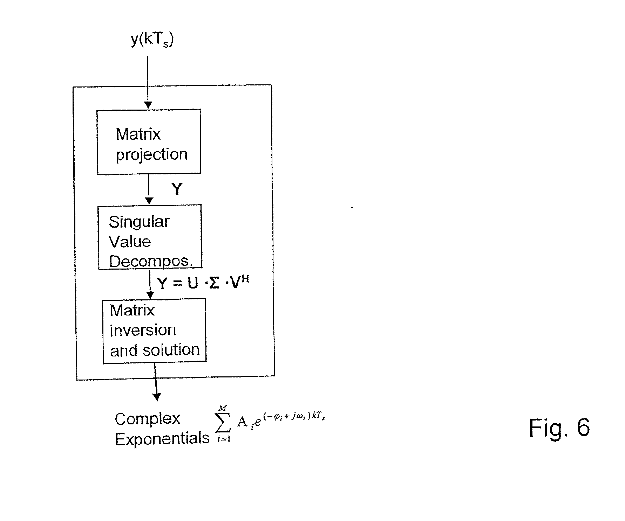

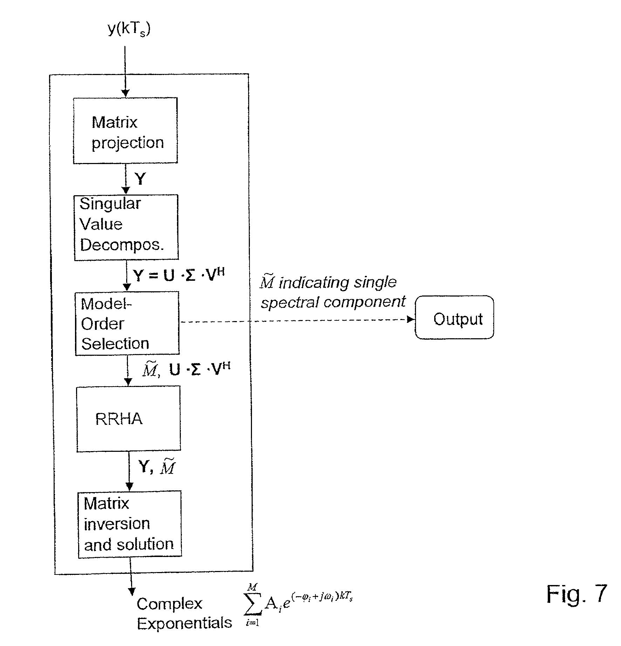

The time-domain eigenvalue decomposition (super-resolution technique) will now be explained in more detail. Fig. 6 shows a first embodiment of the time-domain eigenvalue decomposition step of Fig. 4. Fig. 7 shows a diagram of a second example of the time-domain eigenvalue decomposition step of Fig. 4.

In this stage, a time-domain eigenvalue-decomposition of the time-domain signal y(t), $y(kT_s)$ is performed for determining the at least one complex exponential having the at least one estimated frequency $f_i$ and corresponding amplitude $A_i$.

The objective of time-domain eigenvalue decomposition methods is to estimate a (uniformly sampled) time-domain signal X $(kT_s)$, in the presence of noise $n(kT_s)$, with at least one, or a group of (non equally spaced) complex exponentials, as shown in the following equation:

$$ y(kT_s) = x(kT_s) + n(kT_s) \approx \sum_{i=1}^{M} A_i z_i^k + n(kT_s) = \sum_{i=1}^{M} A_i e^{(-\varphi_i + j\omega_i)kT_s} + n(kT_s), \qquad w_i = 2\Pi f_i. $$

The time-domain eigenvalue decomposition can be formulated in multiple ways. For example, a MUSIC (Multiple Signal Classification (MUSIC) based method, or a Matrix-Pencil (MP) based method can be used. In particular, the Matrix-Pencil based method can be a direct Matrix-Pencil method or an Estimation of Parameters via Rotational Invariant Techniques (ESPRIT), which is a variation of the direct Matrix-Pencil method.

The Matrix-Pencil based method is now described in more detail. Assuming from a vector with uniformly sampled elements, $y(0, 1, ..., N-1)$, a projection matrix **Y** with size $(N - L+1)$ x $(L+1)$ is created as shown in the following:

$$ \mathbf{Y} = \begin{bmatrix} y(0) & y(1) & \dots & y(L) \\ y(1) & & \dots & y(L+1) \\ \vdots & \vdots & & \vdots \\ y(N-L) & y(N-L+1) & & y(N-1) \end{bmatrix}_{(N-L+1)\times(L+1)} $$

From matrix **Y**, two matrices **Y₁** and **Y₂** can be created, shown in the following:

$$ \mathbf{Y}_1 = \begin{bmatrix} y(0) & y(1) & \dots & y(L-1) \\ y(1) & & \dots & y(L) \\ \vdots & \vdots & & \vdots \\ y(N-L-1) & y(N-L) & & y(N-2) \end{bmatrix}_{(N-L)\times(L)} $$

$$ \mathbf{Y}_2 = \begin{bmatrix} y(1) & y(2) & \dots & y(L) \\ y(2) & & \dots & y(L+1) \\ \vdots & \vdots & & \vdots \\ y(N-L) & y(N-L+1) & & y(N-1) \end{bmatrix}_{(N-L)\times(L)} $$

Matrices **Y, Y₁** and **Y₂** have a contribution of a signal and a noise subspace and the objective is to extract the signal subspace, **X,** from **Y** in order to obtain the complex exponential components that define the time-domain signal which is being processed. Singular value decomposition (SVD) is used to separate these sub spaces. The SVD decomposition equation for matrix **Y** is show in the following equation:

$$\mathbf{Y} = \mathbf{U} \cdot \mathbf{\Sigma} \cdot \mathbf{V}^{H} \; .$$

The matrix **U** is a unitary matrix and represents the left singular vectors of **Y, V** is an orthogonal matrix and represents the right singular vectors of **Y** and finally $\Sigma$ is a diagonal matrix with the singular values $\sigma_i$ related to the singular vectors. This decomposition can be applied likewise to matrices **Y$_1$** and **Y$_2$**. Subsequently matrix **Y** and/or **Y$_1$** and **Y$_2$** depending on the implementation are truncated (represented by the subscript $T$) using the $M$ biggest singular values and vectors. This is analytically described in the following equation:

$$\mathbf{Y}_{T} = \mathbf{U}_{T} \cdot \mathbf{\Sigma}_{T} \cdot \mathbf{V}_{T}^{H} \; .$$

$M$ is the number of singular values related to the signal subspace (also called model-order) and $L$ - $M$ the smaller singular values related to the noise subspace. The number $M$ of singular values that define the signal subspace is decided, in most of the state of the art published material by defining a tolerance factor s which is applied to the biggest singular value. $M$ is determined as the number of singular values bigger than the tolerance factor times the biggest singular value. This assumes that the singular values are ordered by decreasing magnitude as it is analytically described in the following equation:

$$\frac{\sigma_1}{\sigma_1} \geq \frac{\sigma_2}{\sigma_1} \geq \dots \geq \frac{\sigma_M}{\sigma_1} \geq \varepsilon \geq \frac{\sigma_{M+1}}{\sigma_1} \; .$$

Now the direct Matrix-Pencil method will be considered, for example as proposed by Sarkar in Sarkar et al. "Using the Matrix Pencil Method to Estimate the Parameters of a Sum of Complex Exponentials", IEEE Antennas and Propagation Magazine, vol. 37, no. 1, pp. 48-55, February 1995, which is incorporated by reference herein.. The truncation is applied to both **Y$_1$** and **Y$_2$** and complex exponentials are obtained solving the eigenvalues from the following equation:

$$\left\{ \mathbf{Y}_{2T} - \lambda \mathbf{Y}_{1T} \right\}_{L \times M} \Rightarrow \left\{ \mathbf{Y}_{1T}^{+} \cdot \mathbf{Y}_{2T} - \lambda \cdot \mathbf{I} \right\}_{M \times M'} \; .$$

For the ESPRIT variation additional SVDs are realized and applied to the **U** and **V** vectors, as shown in the following:

$$\left[ \mathbf{U}_1, \mathbf{U}_2 \right] = \mathbf{U}_U \cdot \mathbf{\Sigma}_U \cdot \left[ \mathbf{V}_{U_1}^{H}, \mathbf{V}_{U_2}^{H} \right] \qquad \left[ \mathbf{V}_1, \mathbf{V}_2 \right] = \mathbf{U}_V \cdot \mathbf{\Sigma}_V \cdot \left[ \mathbf{V}_{V_1}^{H}, \mathbf{V}_{V_2}^{H} \right] .$$

The ESPRIT variation is for example described in Hua et al., "On SVD for Estimating Generalized Eigenvalues of Singular Matrix Pencil in Noise", IEEE Transactions on Signal Processing, vol. 39, no. 4, pp. 892-900, April 1991, which is incorporated by reference herein.

The solution is obtained by extracting the eigenvalues of the following equation:

$$\mathbf{V}_{U_1}^{H} \mathbf{\Sigma}_1 \mathbf{V}_{V_1} - \lambda \mathbf{V}_{U_2}^{H} \mathbf{\Sigma}_2 \mathbf{V}_{V_{21}} .$$

In each of the embodiments shown in Fig. 6 and Fig. 7, a Matrix-Pencil based method is performed. This is done by first performing a matrix projection of the time-domain signal y(t), $y(kT_s)$ yielding at least one projection matrix **Y.** Then, a singular-value-decomposition SVD of the at least one projection matrix **Y** yielding matrices $\mathbf{U} \cdot \Sigma \cdot \mathbf{V}^H$ is performed. The matrix **E** is a diagonal matrix having a number L of singular values. Further a Matrix inversion and solution for determining the at least one complex exponential signal using a model order is performed. The Matrix-Pencil based method can in particular be a rotational invariance technique based estimation of signal parameter (ESPRIT) method.

The embodiment of Fig. 7 differs from the embodiment of Fig. 6 by an additional model-order selection step and an additional reduced-rank-Hankel approximation step. These steps improve the performance of the Matrix-Pencil based method.

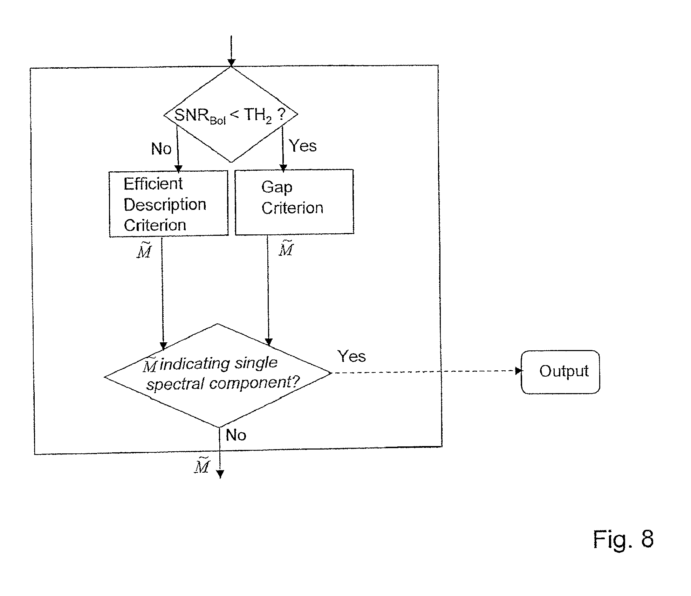

Fig. 8 shows an example of the model-order selection step of Fig. 7. In particular, the determined signal-to-noise ratio from the pre-estimation stage can be used in this model-order selection step. In Fig. 8, first the determined signal-to-noise ratio $SNR_{Bol}$ is compared with a second threshold $TH_2$. A first model-order-selection method is only performed, if the signal-to-noise ratio $SNR_{Bol}$ is equal to or above the second threshold $TH_2$. A second model-order-selection method is performed, if the signal-to-noise ratio $SNR_{Bol}$ is below the second threshold $TH_2$. Thus, this is another example where the $SNR_{Bol}$ is used in a subsequent processing step. The first model-order-selection method mentioned above can be based on an efficient description criterion (EDC) and the second model-order-selection method can be based on a gap criterion. The method based on the gap criterion can in particular incorporate the following formulas:

$$r_i = \frac{\sigma_i}{\sigma_{i+1}}, \, i = 1 \, \dots \, L,$$

$$r'_i = r_{i+1} - r_i,$$

$$M_A = \arg\max_i \mathbf{r'},$$

$$r'_{M_B} \le r'_{M_A} \cdot \varepsilon_M,$$

$$\widetilde{M} = M_B - 1,$$

wherein $\sigma_i$ is the i-th singular value, $L$ is the number of singular values, and $\varepsilon_M$ is a tolerance factor. In this way, by using the determined signal-to-noise ratio, for example the robustness in low SNR situations or conditions can be improved.

Further, as can be seen in Fig. 5, if the determined model-order indicates a single spectral component (meaning only one target object), then the super-resolution method does not need to continue and is thus terminated and an output of the estimated frequency is given. Only if the determined model order does not indicate a single spectral component, but at least two spectral components (meaning at least two target objects), the super-resolution method continues. In this way, the computational load can be reduced. However, alternatively, if the determined model-order indicates a single spectral component (meaning only one target object), then the super-resolution method may nevertheless be continued and subsequent processing steps may be performed. In this way, the accuracy of the result may be improved, even if there is only one target object.

Then, in Fig. 7, the reduced-rank-Hankel-approximation (RRHA) algorithm can be performed. In particular, the estimated model order $\widetilde{M}$ can be used in the reduced-rank-Hankel approximation (RRHA) algorithm. Alternatively or cumulatively the determined signal-to-noise ratio $SNR_{Bol}$ can be used in the reduced-rank-Hankel approximation RRHA algorithm. The stopping criterion of the reduced-rank-Hankel approximation RHHA algorithm can in particular be:

$$\left| \frac{\left\| \left( HR_{ank} \right)^{i} \left\{ \mathbf{Y} \right\} \right\|_{F}}{\left\| \left( HR_{ank} \right)^{i-1} \left\{ \mathbf{Y} \right\} \right\|_{F}} \right| \leq \varepsilon_{RRHA} \, ,$$

wherein **Y** is the projection matrix, $H$ is a Hankel operator, $R_{ank}$ is a reduced-rank operator, $F$ is the Frobenius norm, and $\varepsilon_{RRHA}$ is a convergence value selected based on the determined signal-to-noise ratio $SNR_{Bol}$. In an example, the determined signal-to-noise ratio $SNR_{Bol}$ can be compared with a third threshold $TH_3$. The convergence value $\varepsilon_{RRHA}$ is then set to a predefined value, if the determined signal-to-noise ratio $SNR_{Bol}$ is equal to or above the third threshold $TH_3$. The convergence value $\varepsilon_{RRHA}$ is a value depending on the quotient between the determined signal-to-noise ratio $SNR_{Bol}$ and the third threshold $TH_3$, if the determined signal-to-noise ratio $SNR_{Bol}$ is below the third threshold $TH_3$. This is another example where the $SNR_{Bol}$ is used in a subsequent processing step. In this way, for example the robustness in low SNR situations or conditions can be improved.

The model-order selection algorithm and the reduced-rank-Hankel approximation will now be explained in some further detail. After generation of the projection matrix and application of singular value decomposition, the singular values are used to estimate the number of components which define the signal subspace. This estimation can be then formulated as a model-order selection problem. One consideration has to be taken into account here. In case the time-domain signal is real, two complex exponentials are estimated for every spectral component. Otherwise, if the time-domain signal is complex, a single complex exponential is estimated for every component.

There are two types of model order estimation methods, a non-parametric (or "a priori") and a parametric (or "a posteriori") estimation type. This is for example described in Nadler, "Nonparametric Detection of Signals by Information Theoretic Criteria: Performance Analysis and an Improved Estimator", IEEE Transactions on Signal Processing, vol. 58, no. 5, pp. 2746-2756, May 2010, which is incorporated by reference herein.

With the parametric type, a complete solution of the problem is calculated for different model order possibilities and based on the results the order of the problem is defined. With the non-parametric type, the order of the problem is estimated in an intermediate step. The parametric method is more accurate but requires higher complexity. The advantage of the non-parametric method is that lower complexity is required, but the resulting accuracy is worse. In order to maintain a low level of complexity, it is thus preferable to use the non-parametric model-order estimation method.

The non-parametric model order estimation uses the singular values $(\sigma_1, \sigma_2, ...,\sigma_L)$ of the leading diagonal of the diagonal matrix $\Sigma$, which was obtained during the SVD step:

$$\Sigma = \begin{bmatrix} \sigma_1 & 0 & ... & 0 \\ 0 & \sigma_2 & ... & 0 \\ \vdots & \vdots & & \vdots \\ 0 & 0 & ... & \sigma_L \end{bmatrix} , \left\{ \sigma_1, \sigma_2, ..., \sigma_L \right\} .$$

Any suitable non-parametric method can be used. For example, an Information Theoretic Criterion (ITC) based method can be used. It provides a good solution when the SNR is high. In another example an Akaike Information Criterion (AIC), Minimum Description Length (MDL) or Efficient Description Criterion (EDC) based method can be used.

In particular, in the signal processing unit or method described herein, an EDC based method can be used, when the determined SNR is higher than $TH_2$. In EDC a value is calculated for every possible model size to generate a vector:

$$\widetilde{M}_{EDC} = \arg\min_{M} EDC(M) = \arg\min_{M} \left( -2\ln\left( L_M\left(\mathbf{Y}, \hat{\Theta}\right) \right) + \sqrt{N \cdot \ln(\ln(N))} \cdot \frac{M \cdot (2 \cdot L - M)}{2 \cdot N} \right)$$

where

$$\ln\left(L_M\left(Y,\hat{\Theta}\right)\right) = N\left(L-M\right)\ln\frac{G\left(\sigma_{M+1},...,\sigma_L\right)}{A\left(\sigma_{M+1},...,\sigma_L\right)}.$$

In the first term of the equation, the natural logarithm is applied to the division between the geometric and the arithmetic mean of the singular values with higher index than the hypothetic model size $M$. The result of the logarithm is multiplied with the product between the size of the measured signal $N$ and the difference between the size of the number of singular values obtained $L$ and the hypothetic model size $M$. The second term of the equation is a penalty element which penalizes higher order estimations in front of lower order estimations. The second term depends on $M$, $L$ and $N$. Once the vector is calculated for every possible model size, the index of the minimum value is extracted and this index is considered as the model-order of the problem.

An EDC based method is for example explained in R. Badeau, "A new perturbation analysis for signal enumeration in rotational invariance techniques", IEEE Transactions on Signal Processing, vol. 54, no.2, pp. 450-458, February 2006, which is incorporated by reference herein.

With low SNR environments, another method called gap criterion can show better results. Gap criterion is a method which uses the geometrical distance, also called gap, between the singular values in order to define the border between signal subspace and noise subspace. The basic idea is that the singular values related to the noise subspace are relatively similar between them, and the biggest gap between singular values exists between the signal and noise subspace. A gap criterion method is for example described in Liavas et al., "Blind Channel Approximation: Effective Channel Order Determination", IEEE Transactions on Signal Processing, vol. 47, no. 12, pp. 3336-3344, December 1999, which is incorporated by reference herein.

By taking our estimate model size (or rank estimate for the signal subspace) to be $\tilde{M}$, the signal space can be represented by the matrix $\mathbf{S}_M$, and the noise subspace can be represented by $N_M$, as shown in the following equations, where r is a vector containing the gap distances between the singular eigenvalues:

$$\mathbf{S}_M \approx \sum_{i=1}^{\tilde{M}} \sigma_i \mathbf{u}_i \mathbf{u}_i^H \qquad \mathbf{N}_M \approx \sum_{i=\tilde{M}+1}^{L} \sigma_i \mathbf{u}_i \mathbf{u}_i^H$$

$$r_i = \frac{\sigma_i}{\sigma_{i+1}} \qquad \tilde{M} = \operatorname{argmax}_i \mathbf{r}$$

In particular, in the signal processing unit or method describe herein, a variation of the gap criterion described above can be used, when the determined SNR is lower than $TH_2$. In this variation, the following formulas can be used:

$$r'_i = r_{i+1} - r_i \qquad M_A = \arg\max_i \mathbf{r'}$$

$$r'_{M_B} \leq r'_{M_A} \cdot \varepsilon_M \qquad \tilde{M} = M_B - 1$$

The difference between consecutive elements $r_i$ (where $i = 1,..., L$) of the gap vector r is calculated. The index of the maximum position $M_A$ is extracted and a tolerance factor $\varepsilon_M$ is applied to the element of $\mathbf{r'}$ in the maximum position $r'_{M_A}$. The last index after the maximum which is bigger than $r'_{M_A} \cdot \varepsilon_M$ is extracted and called $M_B$. The estimated order $\tilde{M}$ is the index just before $M_B$. Note that if there isn't any other consecutive value of r' bigger than $r'_{M_A}$ times the tolerance

factor $\varepsilon_M$, $M_B$ is set equal to $M_A$. In case $M_B$ equals 1, the estimated order $\tilde{M}$ is set to 1.

The rank truncation operator with truncation order $M$ is:

$$\mathbf{X} = R_{ank}\{\mathbf{Y}\} = \sum_{i=1}^{M} \sigma_i \mathbf{u}_i \mathbf{v}_i^H \quad .$$

It does not preserve the Hankel structure that a projection matrix has. An example of a Hankel matrix is:

$$\mathbf{A} = \begin{bmatrix} a & b & c & d \\ b & c & d & e \\ c & d & e & f \\ d & e & f & g \end{bmatrix}$$

For a Hankel matrix an element x $_{i,j}$ at row i and column j can be defined as $x_{ij} = x_{i-1,j+1}$.

A consequence of ignoring this property is a degradation of the separation between signal and noise when the SNR conditions are low. The application of a single Hankel operator after a rank approximation is:

$$\mathbf{X} = H\{\mathbf{Y}\} \quad \Rightarrow \quad \mathbf{x}_{i,j} = \frac{1}{\left| \Lambda_{i+j} \right|} \sum_{(i',j') \in \Lambda_{i+j}} \mathbf{y}_{i',j'} \quad .$$

This does not solve the issue because, in this case, the reduced-rank property is not kept anymore, which means that no analytic operator can keep both properties at the same time. A solution for this issue is the application of the Reduced Rank Hankel Approximation (RRHA) algorithm to generate a matrix that approximates both properties as indicated in the following equation, where J stands for the RRHA operation:

$$\mathbf{X} = J\{\mathbf{Y}\} = (HR_{ank})^{\infty}\{\mathbf{Y}\} = \lim_{L \longrightarrow \infty}(HR_{ank})^{l,r}\{\mathbf{Y}\} = \lim_{L \to \infty}(H\{R_{ank}H\{R_{ank}..H\{R_{ank}\{\mathbf{Y}\}\}\}\}) .$$

Theoretically the algorithm only converges after infinite iterations, as shown in the above equation. Therefore this mathematical expression can not be implemented but approximated. In the signal processing unit and method described herein, the number of iterations of the RRHA algorithm is limited taking into account the pre-detected SNR and the difference between two consecutive iterations.

The convergence of the RRHA algorithm can be decided by analyzing the variation between two consecutive iterations. It is considered that the algorithm has converged, if the Frobenius norm between two consecutive iterations does not exceed a certain relative value $\varepsilon$, also called convergence factor. The convergence of the RRHA algorithm can be by the following equation:

$$\left| \frac{\left\| (HR_{ank})^i \{\mathbf{Y}\} \right\|_F}{\left\| (HR_{ank})^{i-1} \{\mathbf{Y}\} \right\|_F} \right| \le \varepsilon_{RRHA}$$

In the signal processing unit and method disclosed herein, the selection of ε can be done taking into account the pre-detected SNR. If the detected SNR is $TH_3$ (dB) or bigger, ε is set to a certain value, for example 1%. If the SNR is below $TH_3$, the difference between $TH_3$ and the actual SNR is used as a division factor to obtain the convergence factor ε. Just as an example, if the detected SNR is 20 dB and $TH_3$ is 30 dB, the convergence factor ε is:

$$\varepsilon_{actual} = \varepsilon_{TH3} \cdot 10^{-(30-20)} = 0.1\%, \text{ wherein } \varepsilon_{TH_3} = 1\%.$$

After the application of RRHA, the solution is obtained solving the eigenvalues as previously explained.

Returning to Fig. 1, optionally, in a final step a refinement of the at least one estimated frequency can be performed. In particular, the determined signal-to-noise ratio from the pre-estimation stage can be used in this refinement step. This is another example where the $SNR_{Bol}$ is used in a subsequent processing step. This refinement will now be explained in more detail. The at least one estimated frequency of the at least one complex exponential signal can be refined by performing an iterative optimization algorithm. In particular, the signal-to-noise ratio $SNR_{Bol}$ can be compared with a fourth threshold $TH_4$. The iterative optimization algorithm can be performed, only if the signal-to-noise ratio $SNR_{Bol}$ is equal to or above the fourth threshold $TH_4$. This is indicated by a dashed line in Fig. 4. It can be used in order to reduce absolute and relative positioning errors, thus improving the absolute and relative positioning accuracy of the estimation.

The iterative optimization algorithm can for example be a (iterative) least squares algorithm with the at least one complex exponential, in particular multiple complex exponentials, as seeds. This iterative optimization algorithm may use the cost function:

$$f_{\cos t} = w_1 \cdot MSE(\mathbf{r}_{yy}, \mathbf{r}_{yx}) + w_2 \cdot \mathbf{r}_{yx}(0),$$

wherein $w_1$ and $w_2$ is each a weight, *MSE* is a mean square error, $r_{yy}$ is an autocorrelation of the time-domain signal y (kTs), and $r_{yx}$ is a cross-correlation between the time-domain signal y(kTs) and the complex exponential signal. This cost function used in the optimization problem measures the difference between the (uniformly) sampled input vector, **y,** and the iteratively corrected synthesized signal with complex exponentials $\tilde{\mathbf{x}}$ ($\tilde{\mathbf{x}}$ being an estimation of **x).** As indicated in the above formula, first the mean square error between the autocorrelation $\mathbf{r}_{yy}$ of the normalize input signal and the cross-correlation $\mathbf{r}_{yx}$ between the normalized input and the normalized synthesized signal is calculated. Then, the cost function f cost is formed by weighting the mean square error MSE by the weight $w_1$ and adding the result to the cross-correlation of **y** and **x** at zero offset weighted by the weight $w_2$.

A stopping criterion of the iterative optimization algorithm may be at least one criterion selected from the group comprising reaching a predefined maximum number of iterations $max_{iter}$, determining that a variation of the estimated frequency between successive iterations is less than a frequency resolution divided by a predefined factor, and determining that a variation of the cost function $f_{cost}$ is below a minimum allowed variation of the cost function $\varepsilon_{cost}$. In particular, all three criteria can be used.

In case of the object detection system as explained with reference to Fig. 1, the stopping criterion can be determining that a variation of the range R between successive iterations is less than a range resolution δR divided by a predefined factor $R_{fact}$.

The minimum allowed variation of the cost function $\varepsilon_{cost}$ can depend on the determined signal-to-noise ratio $SNR_{Bol}$. In particular, the minimum allowed variation of the cost function $\varepsilon_{cost}$ can be a predefined value $\varepsilon_{cost TH_5}$, if the signal-to-noise ratio $SNR_{Bol}$ is equal to or above a fifth threshold $TH_5$. If the signal-to-noise ratio $SNR_{Bol}$ is below

the fifth threshold $TH_5$, the minimum allowed variation of the cost function $\varepsilon_{\cos t}$ can be the predefined value $\varepsilon_{\cos t\ TH5}$ multiplied by a quotient between the determined signal-to-noise ratio $SNR_{BoI}$ and the fifth threshold $TH_5$. A linear scale can be assumed here. This is another example where the $SNR_{BoI}$ is used in a subsequent processing step.

Just as an example, the stopping criterion can be the following three. The first stopping criterion can be determining that the variation of the range position in all the estimated exponentials from one iteration to the next one is smaller than the range resolution (applying frequency-domain techniques) c / (2Δf) divided with a predefined factor $R_{fact}$ (e.g. 100 or the like). The second stopping criterion can be determining that the relative variation of the cost function $\varepsilon_{\cos t}$ is below a minimum allowed variation of the cost function. This can for example be defined depending on the SNR. If the SNR is higher than $TH_5$, $\varepsilon_{\cos t\ TH5}$ is set to a certain value, for example 0.1%. If the detected SNR is lower than $TH_5$, the difference in SNR is applied as a division factor to $\varepsilon_{\cos t\ TH5}$. The third stopping criterion can be that, in case any of the stop options are not fulfilled, the algorithm stops after a certain number of iterations $max_{iter}$. This number can depend on the computational resources available and the processing time allowed before the result is required.

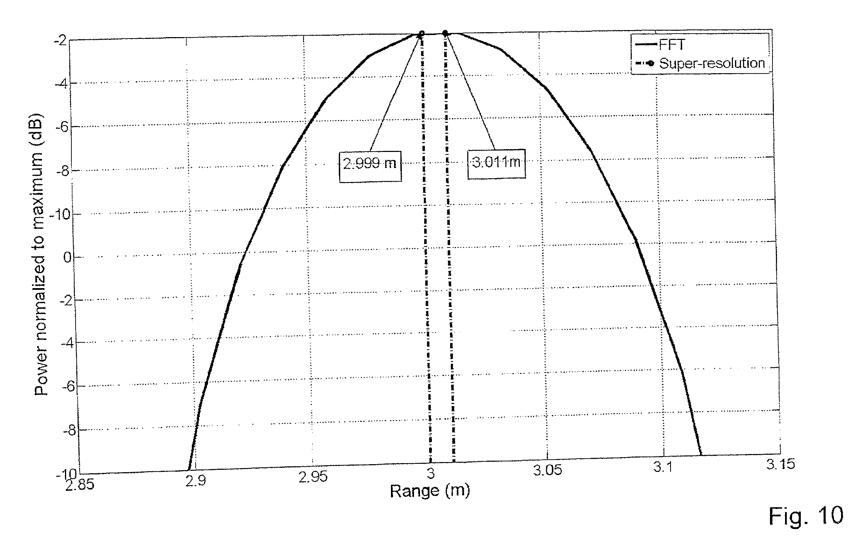

The performance of the (time-domain super-resolution) algorithm described herein will now be explained with reference to Fig. 10. Fig. 10 shows a graph of an exemplarily power spectrum showing results of the time-domain super-resolution algorithm described herein (dotted lines in Fig. 10) compared to a conventional frequency-domain method such as FFT (solid line in Fig. 10). In particular, Fig. 10 shows results of Monte-Carlo simulations in which 50 independent runs were performed to statistically evaluate the algorithm performance for different relative distances between the target objects and different SNR conditions. A bandwidth of 1 GHz was used. This bandwidth yields a theoretical range resolution of 15 cm for the frequency-domain method, which range resolution is limited to c/ (2Δf), as previously explained. For Fig. 10 mean detection with two target objects separated by a high SNR of 45 dB was used. As can be seen from Fig. 10 targets placed at 3 and 3.01 m in the example, thus with a distance of 1 cm in between. As can be seen in Fig. 10 (solid line), when using the frequency-domain method only one peak is detected, due to the distance between target objects (1 cm in this example) being smaller than the theoretical range resolution (15 cm in this example). However, as can be seen in Fig. 10 (dotted lines), when using the time-domain super-resolution method described herein, the two target objects can be distinguished. Thus, the range resolution in this case is 15 times better than the theoretical range resolution of 15 cm for the frequency-domain method. The mean relative distance detected over the 50 runs with the time-domain super-resolution method was 1.3 cm and the standard deviation 0.43.

The invention has been illustrated and described in detail in the drawings and foregoing description, but such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored / distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

It follows a list of further embodiments:

1. A signal processing unit for accurately estimating from a time-domain signal (y(t), $y(kT_s)$) at least one frequency ($f_i$) and corresponding amplitude ($A_i$) of at least one complex exponential, the signal processing unit configured to:

- transform the time-domain signal (y(t), $y(kT_s)$) into a frequency-domain signal (Y(f)),
- detect at least one peak frequency ($f_{peak}$) in a power spectrum of the frequency-domain signal (Y(f)),
- determine at least one frequency band of interest (BoI) corresponding to the at least one peak frequency ($f_{peak}$),
- determine at least one signal-to-noise ratio ($SNR_{BoI}$) corresponding to the at least one frequency band of interest (BoI), and
- perform at least one subsequent time-domain processing step for accurately estimating, based on the time-domain signal (y(t), $y(kT_s)$), the at least one frequency ($f_i$) and corresponding amplitude ($A_i$) of the at least one complex exponential using the at least one frequency band of interest (BoI) and/or the at least one signal-to-noise ratio ($SNR_{BoI}$).

2. The signal processing unit of one of the preceding embodiments, configured to determine the at least one frequency band of interest (BoI) by determining a start frequency ($f_a$) on one side with respect to the corresponding peak frequency ($f_{peak}$) and a stop frequency ($f_b$) on the other side with respect to corresponding peak frequency ($f_{peak}$).

3. The signal processing unit of embodiment 2, configured to determine each of the start frequency ($f_a$) and the stop frequency ($f_b$) at a predefined distance from the corresponding peak frequency ($f_{peak}$), or to determine each of the start frequency ($f_a$) and the stop frequency ($f_b$) at a predefined power level threshold ($P_{TH}$).

4. The signal processing unit of one of the preceding embodiments, configured to determine the signal-to-noise ratio ($SNR_{BoI}$) as the ratio of the maximum power level ($Y(f_{peak})$) in the corresponding frequency band of interest (BoI) and the mean value of the power spectrum outside the corresponding frequency band of interest (BoI).

5. The signal processing unit of one of the preceding embodiments, configured to compare the signal-to-noise ratio ($SNR_{BoI}$) with a first threshold ($TH_1$), and to perform subsequent processing steps, only if the signal-to-noise ratio ($SNR_{BoI}$) is equal to or above the first threshold ($TH_1$).

6. The signal processing unit of embodiment 5, configured to output the at least one peak frequency ($f_{peak}$) and a corresponding amplitude ($A_{peak}$), if the signal-to-noise ratio ($SNR_{BoI}$) is below the first threshold ($TH_1$).

7. The signal processing unit of one of the preceding embodiments, configured to sample the time-domain signal ($y(t)$) yielding a sampled time-domain signal ($y(kT_s)$) .

8. The signal processing unit of one of the preceding embodiments, configured to filter the time-domain signal ($y(t)$, $y(kT_s)$) using at least one adaptive band-pass filter corresponding to the at least one determined frequency band of interest (BoI).

9. The signal processing unit of one of the preceding embodiments, configured to perform a time-domain eigenvalue-decomposition of the time-domain signal ($y(t)$, $y(kT_s)$) for determining the at least one complex exponential having the at least one estimated frequency ($f_i$) and corresponding amplitude ($A_i$).

10. The signal processing unit of embodiment 9, configured to perform a Matrix-Pencil based method by performing a matrix projection of the time-domain signal ($y(t)$, $y(kT_s)$) yielding at least one projection matrix **(Y),** performing a singular-value-decomposition (SVD) of the at least one projection matrix **(Y)** yielding matrices ($\mathbf{U} \cdot \Sigma \cdot \mathbf{V^H}$) comprising a diagonal matrix **(E)** having a number (L) of singular values, and performing a Matrix inversion and solution for determining the at least one complex exponential signal using a model order ($\tilde{M}$).

11. The signal processing unit of embodiment 10, wherein the Matrix-Pencil based method is a rotational invariance technique based estimation of signal parameter (ESPRIT) method.

12. The signal processing unit of one of embodiments 10 to 11, configured to perform a model-order-selection algorithm for estimating the model order ($\tilde{M}$).

13. The signal processing unit of embodiment 12, configured to compare the determined signal-to-noise ratio ($SNR_{BoI}$) with a second threshold ($TH_2$), and performing a first model-order-selection method, if the signal-to-noise ratio ($SNR_{BoI}$) is equal to or above the second threshold ($TH_2$), and performing a second model-order-selection method, if the signal-to-noise ratio ($SNR_{BoI}$) is below the second threshold ($TH_2$).

14. The signal processing unit of embodiment 13, wherein the first model-order-selection method is based on an efficient description criterion (EDC) and/or wherein the second model-order-selection method is based on a gap criterion.

15. The signal processing unit of embodiment 14, wherein the method based on the gap criterion incorporates the formulas

$$r_i = \frac{\sigma_i}{\sigma_{i+1}}, i = 1 \ldots L,$$

$$r'_i = r_{i+1} - r_i \, ,$$

$$M_A = \arg\max_i \mathbf{r'} \, ,$$

$$r'_{M_B} \leq r'_{M_A} \cdot \varepsilon_M \, ,$$

$$\widetilde{M} = M_B - 1 \, ,$$

wherein $\sigma_i$ is the i-th singular value, L is the number of singular values, and $\varepsilon_M$ is a tolerance factor.

16. The signal processing unit of one of embodiments 9 to 15, further configured to perform a reduced-rank-Hankel-approximation (RRHA) algorithm.

17. The signal processing unit of embodiment 16, wherein the estimated model order ($\widetilde{M}$) is used in the reduced-rank-Hankel approximation (RRHA) algorithm.

18. The signal processing unit of embodiment 16 or 17, wherein the determined signal-to-noise ratio ($SNR_{Bol}$) is used in the reduced-rank-Hankel approximation (RRHA) algorithm.

19. The signal processing unit of one of embodiments 16 to 18, wherein the stopping criterion of the reduced-rank-Hankel approximation (RHHA) algorithm is

$$\left| \frac{\left\| \left( HR_{ank} \right)^i \{Y\} \right\|_F}{\left\| \left( HR_{ank} \right)^{i-1} \{Y\} \right\|_F} \right| \leq \varepsilon_{RRHA} \, ,$$

wherein $\mathbf{Y}$ is the projection matrix, $H$ is a Hankel operator, $R_{ank}$ is a reduced-rank operator, $F$ is the Frobenius norm, and $\varepsilon_{RRHA}$ is a convergence value selected based on the determined signal-to-noise ratio ($SNR_{Bol}$).

20. The signal processing unit of embodiment 19, configured to compare the determined signal-to-noise ratio ($SNR_{Bol}$) with a third threshold ($TH_3$), wherein the convergence value ($\varepsilon_{RRHA}$) is set to a predefined value, if the determined signal-to-noise ratio ($SNR_{Bol}$) is equal to or above the third threshold ($TH_3$), and wherein the convergence value ($\varepsilon_{RRHA}$) is a value depending on the quotient between the determined signal-to-noise ratio ($SNR_{Bol}$) and the third threshold ($TH_3$), if the determined signal-to-noise ratio ($SNR_{Bol}$) is below the third threshold ($TH_3$).

21. The signal processing unit of one of embodiments 9 to 20, configured to refine the at least one estimated frequency of the at least one complex exponential signal by performing an iterative optimization algorithm.

22. The signal processing unit of embodiment 21, configured to compare the signal-to-noise ratio ($SNR_{Bol}$) with a fourth threshold ($TH_4$), and to perform the iterative optimization algorithm, only if the signal-to-noise ratio ($SNR_{Bol}$) is equal to or above the fourth threshold ($TH_4$).

23. The signal processing unit of embodiment 21 or 22, wherein the iterative optimization algorithm is a least squares algorithm with the at least one complex exponential as seeds.

24. The signal processing unit of one of embodiments 21 to 23, wherein the iterative optimization algorithm uses the cost function

$$f_{\cos t} = w_1 \cdot MSE\big(\mathbf{r}_{yy}, \mathbf{r}_{yx}\big) + w_2 \cdot \mathbf{r}_{yx}(0),$$

wherein $w_1$ and $w_2$ is each a weight, *MSE* is a mean square error, $r_{yy}$ is an autocorrelation of the time-domain signal (y(kTs)), and $r_{yx}$ is a cross-correlation between the time-domain signal (y(kTs)) and the complex exponential signal.

25. The signal processing unit of one of embodiments 21 to 24, wherein a stopping criterion of the iterative optimization algorithm is at least one criterion selected from the group comprising reaching a predefined maximum number of iterations ($max_{iter}$), determining that a variation of the estimated frequency between successive iterations is less than a frequency resolution divided by a predefined factor, and determining that a variation of the cost function ($f_{cost}$) is below a minimum allowed variation of the cost function ($\varepsilon_{\cos t}$).

26. The signal processing unit of embodiments 25, wherein the minimum allowed variation of the cost function ($\varepsilon_{\cos t}$) depends on the determined signal-to-noise ratio ($SNR_{BoI}$).

27. The signal processing unit of embodiment 26, wherein the minimum allowed variation of the cost function ($\varepsilon_{\cos t}$) is a predefined value ($\varepsilon_{\cos t\,TH_5}$), if the signal-to-noise ratio ($SNR_{BoI}$) is equal to or above a fifth threshold ($TH_5$), and wherein the minimum allowed variation of the cost function ($\varepsilon_{\cos t}$) is the predefined value ($\varepsilon_{\cos t\,TH_5}$) multiplied by a quotient between the determined signal-to-noise ratio ($SNR_{BoI}$) and the fifth threshold ($TH_5$), if the signal-to-noise ratio ($SNR_{BoI}$) is below the fifth threshold ($TH_5$).

28. The signal processing unit of one of the preceding embodiments, configured to detect a number of peak frequencies ($f_{peak\,n}$), to determine a corresponding frequency band of interest ($BoI_n$) for each peak frequency ($f_{peak\,n}$), and to determine a corresponding signal-to-noise ratio ($SNR_{BoI\,n}$) for each frequency band of interest ($BoI_n$).

29. The signal processing unit of one of embodiments 1 to 27, configured to detect a number of peak frequencies ($f_{peak\,n}$), to determine a corresponding frequency band of interest ($BoI_n$) for each peak frequency ($f_{peak\,n}$), to join at least part of the number of frequency bands of interest to a joint frequency band of interest, and to determine a corresponding signal-to-noise ratio for the joint frequency band of interest.

30. An object detection system (10) for detecting at least one target object (1) at a range (R), the system comprising:

- a transmitter for transmitting a transmission signal (Tx), and
- a receiver for receiving transmission signal reflections from the at least one target object (1) as a reception signal (Rx), the receiver comprising:
- a mixer (13) for generating a mixed signal based on the transmission signal (Tx) and the reception signal (Rx), and
- the signal processing unit (12) of one of the preceding embodiments, wherein the mixed signal is the time-domain signal (y(t), $y(kT_s)$).

31. The system of embodiment 30, the transmitter comprising a signal generator (11) for generating the transmission signal (Tx).

32. The system of embodiment 31, wherein the signal generator (11) generates a frequency modulated continuous wave (FMCW) transmission signal (Tx) comprising a number of consecutive chirps.

33. The system of one of embodiments 30 to 32, the signal processing unit (12) configured to estimate the range (R) of the at least one target object (1) based on the at least one estimated frequency.

34. The system of embodiment 25 and embodiment 33, wherein the stopping criterion is determining that a variation of the range (R) between successive iterations is less than a range resolution ($\delta R$) divided by a predefined factor ($R_{fact}$).

35. The system of one of embodiments 30 to 34, wherein the at least one complex exponential having the at least one estimated frequency and corresponding amplitude estimates at least one spectral component of the mixed signal, and wherein the at least one estimated frequency estimates at least one frequency difference ($f_{beat}$) between the transmission signal (Tx) and the reception signal (Rx).

36. The system of one of embodiments 30 to 35, wherein the transmitter comprises a single transmitter antenna (15), and the receiver comprises a single receiver antenna (16).

37. A signal processing method for accurately estimating from a time-domain signal ($y(t)$, $y(kT_s)$) at least one frequency ($f_i$) and corresponding amplitude ($A_i$) of at least one complex exponential, the method comprising:

- transforming the time-domain signal ($y(t)$, $y(kT_s)$) into a frequency-domain signal ($Y(f)$),
- detecting at least one peak ($f_{peak}$) in a power spectrum of the frequency-domain signal ($Y(f)$),
- determining at least one frequency band of interest (BoI) corresponding to the at least one peak,
- determining at least one signal-to-noise ratio ($SNR_{BoI}$) corresponding to the at least one frequency band of interest (BoI), and
- performing least one subsequent time-domain processing step for accurately estimating, based on the time-domain signal ($y(t)$, $y(kT_s)$), at the at least one frequency ($f_i$) and corresponding amplitude ($A_i$) of the at least one complex exponential using the at least one frequency band of interest (BoI) and/or the at least one signal-to-noise ratio ($SNR_{BoI}$).

38. A computer program comprising program code means for causing a computer to perform the steps of said method of embodiment 37 when said computer program is carried out on a computer.

39. A computer readable non-transitory medium having instructions stored thereon which, when carried out on a computer, cause the computer to perform the steps of the method of embodiment 37.

**Claims**

1. A signal processing unit for accurately estimating from a time-domain signal ($y(t)$, $y(kT_s)$) at least one frequency ($f_i$) and corresponding amplitude ($A_i$) of at least one complex exponential, the signal processing unit configured to:

   - transform the time-domain signal ($y(t)$, $y(kT_s)$) into a frequency-domain signal ($Y(f)$),
   - detect at least one peak frequency ($fp_{eak}$) in a power spectrum of the frequency-domain signal ($Y(f)$),
   - determine at least one frequency band of interest (BoI) corresponding to the at least one peak frequency ($f_{peak}$),
   - determine at least one signal-to-noise ratio ($SNR_{BoI}$) corresponding to the at least one frequency band of interest (BoI), and
   - perform at least one subsequent time-domain processing step for accurately estimating, based on the time-domain signal ($y(t)$, $y(kT_s)$), the at least one frequency ($f_i$) and corresponding amplitude ($A_i$) of the at least one complex exponential using the at least one frequency band of interest (BoI) and/or the at least one signal-to-noise ratio ($SNR_{BoI}$).

2. The signal processing unit of one of the preceding claims, configured to compare the signal-to-noise ratio ($SNR_{BoI}$) with a first threshold ($TH_1$), and to perform subsequent processing steps, only if the signal-to-noise ratio ($SNR_{BoI}$) is equal to or above the first threshold ($TH_1$).

3. The signal processing unit of one of the preceding claims, configured to filter the time-domain signal ($y(t)$, $y(kT_s)$) using at least one adaptive band-pass filter corresponding to the at least one determined frequency band of interest (BoI).

4. The signal processing unit of one of the preceding claims, configured to perform a time-domain eigenvalue-decomposition of the time-domain signal ($y(t)$, $y(kT_s)$) for determining the at least one complex exponential having the at least one estimated frequency ($f_i$) and corresponding amplitude ($A_i$).

5. The signal processing unit of claim 4, configured to perform a Matrix-Pencil based method by performing a matrix projection of the time-domain signal ($y(t)$, $y(kT_s)$) yielding at least one projection matrix **(Y)**, performing a singular-value-decomposition (SVD) of the at least one projection matrix **(Y)** yielding matrices ($\mathbf{U} \cdot \Sigma \cdot \mathbf{V^H}$) comprising a diagonal matrix **(E)** having a number **(L)** of singular values, and performing a Matrix inversion and solution for determining the at least one complex exponential signal using a model order *($\tilde{M}$).

6. The signal processing unit of claim 5, configured to perform a model-order-selection algorithm for estimating the model order ($\tilde{M}$).

**7.** The signal processing unit of claim 6, configured to compare the determined signal-to-noise ratio ($SNR_{BoI}$) with a second threshold ($TH_2$), and performing a first model-order-selection method, if the signal-to-noise ratio ($SNR_{BoI}$) is equal to or above the second threshold ($TH_2$), and performing a second model-order-selection method, if the signal-to-noise ratio ($SNR_{BoI}$) is below the second threshold ($TH_2$).

**8.** The signal processing unit of one of claims 4 to 7, further configured to perform a reduced-rank-Hankel-approximation (RRHA) algorithm.

**9.** The signal processing unit of claim 8, wherein the determined signal-to-noise ratio ($SNR_{BoI}$) is used in the reduced-rank-Hankel approximation (RRHA) algorithm.

**10.** The signal processing unit of one of claims 4 to 9, configured to refine the at least one estimated frequency of the at least one complex exponential signal by performing an iterative optimization algorithm.

**11.** The signal processing unit of claim 10, configured to compare the signal-to-noise ratio ($SNR_{BoI}$) with a fourth threshold ($TH_4$), and to perform the iterative optimization algorithm, only if the signal-to-noise ratio ($SNR_{BoI}$) is equal to or above the fourth threshold ($TH_4$).

**12.** The signal processing unit of one of claims 10 to 11, wherein a stopping criterion of the iterative optimization algorithm is at least one criterion selected from the group comprising reaching a predefined maximum number of iterations ($max_{iter}$), determining that a variation of the estimated frequency between successive iterations is less than a frequency resolution divided by a predefined factor, and determining that a variation of the cost function ($f_{cost}$) is below a minimum allowed variation of the cost function ($\varepsilon_{cost}$).

**13.** An object detection system (10) for detecting at least one target object (1) at a range (R), the system comprising:

- a transmitter for transmitting a transmission signal (Tx), and
- a receiver for receiving transmission signal reflections from the at least one target object (1) as a reception signal (Rx), the receiver comprising:
- a mixer (13) for generating a mixed signal based on the transmission signal (Tx) and the reception signal (Rx), and
- the signal processing unit (12) of one of the preceding claims, wherein the mixed signal is the time-domain signal ($y(t)$, $y(kT_s)$).

**14.** A signal processing method for accurately estimating from a time-domain signal ($y(t)$, $y(kT_s)$) at least one frequency ($f_i$) and corresponding amplitude ($A_i$) of at least one complex exponential, the method comprising:

- transforming the time-domain signal ($y(t)$, $y(kT_s)$) into a frequency-domain signal ($Y(f)$),
- detecting at least one peak ($f_{peak}$) in a power spectrum of the frequency-domain signal ($Y(f)$),
- determining at least one frequency band of interest (BoI) corresponding to the at least one peak,
- determining at least one signal-to-noise ratio ($SNR_{BoI}$) corresponding to the at least one frequency band of interest (BoI), and
- performing least one subsequent time-domain processing step for accurately estimating, based on the time-domain signal ($y(t)$, $y(kT_s)$), at the at least one frequency ($f_i$) and corresponding amplitude ($A_i$) of the at least one complex exponential using the at least one frequency band of interest (BoI) and/or the at least one signal-to-noise ratio ($SNR_{BoI}$).

**15.** A computer program comprising program code means for causing a computer to perform the steps of said method as claimed in claim 14 when said computer program is carried out on a computer.

Fig. 1

Fig. 2

Fig. 3

EP 2 533 069 A1

Sampling

Pre-estimation

Filtering

Time-domain eigenvalue decomposition

Refinement

Output

y(t)

$y(kT_s)$

$y(kT_s)$

BoI, SNR

Complex exponentials

$SNR_{BoI} < TH_4$

$SNR_{BoI} < TH_1$

Fig. 4

EP 2 533 069 A1

$y(kT_s)$ → [ FFT ] $Y(f)$ → [ Peak detection ] $f_{peak}$ → [ Determine BoI and $SNR_{BoI}$ ] BoI, $SNR_{BoI}$ → ⟨ $SNR_{BoI} < TH_1$ ? ⟩

No → $y(kT_s),$ BoI, $SNR_{BoI}$

Yes ↓

[ Output ]

Fig. 5

Fig. 6

$y(kT_s)$

Matrix projection

**Y**

Singular Value Decompos.

$$\mathbf{Y} = \mathbf{U} \cdot \mathbf{\Sigma} \cdot \mathbf{V}^H$$

Matrix inversion and solution

Complex Exponentials $\sum\limits_{i=1}^{M} A_i e^{(-\varphi_i + j\omega_i)kT_s}$

Fig. 7

Fig. 8

Fig. 9

Fig. 10

Europäisches
Patentamt

European
Patent Office

Office européen
des brevets

**EUROPEAN SEARCH REPORT**

Application Number

EP 12 16 9522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 028 549 A (BUCKREUSS STEFAN [DE] ET AL) 22 February 2000 (2000-02-22) | 1-3,6, 10,14,15 | INV. G01S7/292 G01S3/74 |
| Y | * column 2, lines 40,64-67 - column 3, line 6; figures 2-3,13 * <br> * column 5, lines 29,34-40,63-67 * <br> * column 9, line 64 - column 10, line 2 * <br> * column 11, line 12 - column 12, line 15 * <br> * column 6, lines 43-48 * <br> * column 12, lines 11-12 * <br> ----- | 4,8,13 | |
| Y | US 2010/066586 A1 (LIU GUOQING [US] ET AL) 18 March 2010 (2010-03-18) <br> * paragraph [0026] * <br> ----- | 3 | |
| Y | US 2010/073216 A1 (SAKAMOTO MAI [JP] ET AL) 25 March 2010 (2010-03-25) <br> * paragraph [0018]; figure 1 * <br> ----- | 3,13 | |
| Y | SARKAR: <br> IEEE ANTENNAS AND PROPAGATION MAGAZINE, vol. 37, no. 1, <br> 1 January 1995 (1995-01-01), page 48, XP55037741, <br> ISSN: 1045-9243, DOI: 10.1109/74.370583 <br> * paragraph [0003] * <br> ----- | 3,4 | **TECHNICAL FIELDS SEARCHED (IPC)** <br><br> G01S |
| Y | EP 2 098 881 A2 (FUJITSU LTD [JP]) 9 September 2009 (2009-09-09) <br> * paragraph [0092] * <br> ----- | 8 | |

The present search report has been drawn up for all claims

| Place of search | Date of completion of the search | Examiner |
|---|---|---|
| Munich | 11 September 2012 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 533 069 A1**

**ANNEX TO THE EUROPEAN SEARCH REPORT
ON EUROPEAN PATENT APPLICATION NO.**                    EP 12 16 9522

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2012

| Patent document cited in search report | | Publication date | Patent family member(s) | | Publication date |
|---|---|---|---|---|---|
| US 6028549 | A | 22-02-2000 | DE | 19822957 C1 | 25-05-2000 |
| | | | US | 6028549 A | 22-02-2000 |
| US 2010066586 | A1 | 18-03-2010 | KR | 20100032816 A | 26-03-2010 |
| | | | US | 2010066586 A1 | 18-03-2010 |
| US 2010073216 | A1 | 25-03-2010 | CN | 101685157 A | 31-03-2010 |
| | | | DE | 102009042130 A1 | 29-04-2010 |
| | | | JP | 2010071958 A | 02-04-2010 |
| | | | US | 2010073216 A1 | 25-03-2010 |
| EP 2098881 | A2 | 09-09-2009 | EP | 2098881 A2 | 09-09-2009 |
| | | | JP | 2009210410 A | 17-09-2009 |
| | | | US | 2009224978 A1 | 10-09-2009 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090224978 A1

- US 6529794 B1

**Non-patent literature cited in the description**

- **SARKAR et al.** Using the Matrix Pencil Method to Estimate the Parameters of a Sum of Complex Exponentials. *IEEE Antennas and Propagation Magazine,* February 1995, vol. 37 (1), 48-55
- **HUA et al.** On SVD for Estimating Generalized Eigenvalues of Singular Matrix Pencil in Noise. *IEEE Transactions on Signal Processing,* April 1991, vol. 39 (4), 892-900
- **NADLER.** Nonparametric Detection of Signals by Information Theoretic Criteria: Performance Analysis and an Improved Estimator. *IEEE Transactions on Signal Processing,* May 2010, vol. 58 (5), 2746-2756

- **R. BADEAU.** A new perturbation analysis for signal enumeration in rotational invariance techniques. *IEEE Transactions on Signal Processing,* February 2006, vol. 54 (2), 450-458
- **LIAVAS et al.** Blind Channel Approximation: Effective Channel Order Determination. *IEEE Transactions on Signal Processing,* December 1999, vol. 4 (12), 3336-3344